# EUROPEAN PATENT APPLICATION

(11) **EP 4 481 225 A1**
(43) Date of publication of application: **25.12.2024**
(21) Application number: 23180822.1
(22) Date of filing: 22.06.2023
(51) Int. Cl.: F16D 65/807, F16D 65/827, F16D 65/847

(54) **A BRAKE COOLING SYSTEM**

(71) Applicant: VOLVO TRUCK CORPORATION, 405 08 Göteborg (SE)
(72) Inventor: MANDAL, Goutam, 732121 Malda (IN); SINGH, Ranjeet, 482001 Jabalpur (IN); DAS, Alokekumar, 390023 Vadodara (IN); SHANKAR, Naveen, 562114 Bangalore (IN)
(74) Representative: Zacco Sweden AB

(57) **Abstract**

A brake cooling system (10), comprising a pressurized air source (12) configured to supply compressed air. A flow passage (18) extends from the pressurized air source (12) to a vicinity of a brake assembly, and has an outlet (24) directing the air towards the brake assembly. At least one de Laval nozzle (26) is provided in the flow passage to increase speed and reduce temperature of air passed through the de Laval nozzle (26). A valve (28) controls the fluid communication between the air source (12) and the de Laval nozzle (26). When the valve (28) is closed, air is prevented from reaching the de Laval nozzle (26). When the valve (28) is open, air is allowed to pass to and through the de Laval nozzle (26). A temperature sensor (30) senses the temperature of a brake assembly. If the temperature is above a predefined limit, the valve (28) becomes opened, and air is passed through one or series of de Laval nozzle (26) and to the brake assembly. This brings down the temperature of the brake assembly.

## Description

### TECHNICAL FIELD

The disclosure relates generally to a cooling system. In particular aspects, the disclosure relates to a brake cooling system. In some aspects, the disclosure relates to a vehicle comprising such a brake cooling system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Repeated application of brakes on a vehicle, in particular at high speed and/or high load, increases the risk of sudden brake failure because of the resulting high temperature in the brake assembly. Such brake failure is also known as brake fade. Although natural air flow may to some extent cool the brake assembly, this may not be sufficient for efficiently reducing the risk of brake fade. Thus, there is still room for improvement when it comes to reducing the risk of brake fade.

### SUMMARY

According to a first aspect of the disclosure, there is provided a brake cooling system, comprising
- a pressurized air source configured to supply compressed air,
- a flow passage extending from the pressurized air source to a vicinity of a brake assembly, the flow passage having an outlet directing supplied compressed air towards the brake assembly,
- at least one de Laval nozzle provided in the flow passage, wherein the de Laval nozzle increases the speed and reduces the temperature of compressed air that is passed from the pressurized air source and through the de Laval nozzle,
- a valve configured to control the fluid communication between the pressurized air source and the de Laval nozzle, wherein when the valve is closed compressed air is prevented from reaching the de Laval nozzle and when the valve is open compressed air is allowed to pass to and through the de Laval nozzle, and
- at least one temperature sensor configured to sense the temperature of a brake assembly, wherein sensing by the temperature sensor that the temperature of the brake assembly is above a predefined limit causes the valve to become opened so that compressed air is passed from the pressurized air source through the de Laval nozzle and out through the outlet of the flow passage to the brake assembly in order to bring down the temperature of the brake assembly.

The first aspect of the disclosure may seek to reduce the risk of brake fade. A technical benefit may include that by monitoring the temperature of the brakes, and controlling compressed air to flow through a de Laval nozzle before directing the air to the brakes, an efficient cooling of the brakes may be accomplished. In particular, the de Laval nozzle has a double benefit, as it increases the speed of the compressed air as well as reduces the temperature of the compressed air. Both these changes contribute to an efficient cooling of the brakes.

In the aeronautic/space industries, de Laval nozzle are used in for example rockets to accelerate exhaust gas to produce thrust. The inventors have, however, realized that the technical features of de Laval nozzles could be implemented in other vehicles as well, and not for producing a thrust for a rocket, but instead be used for cooling implementations, in particular for cooling vehicle brakes. The inventors have realized that, when compressed air flows through the de Laval nozzle, the speed of the air at the exit will increase at the expense of the internal energy of the air. The internal energy of the air is directly proportional to the temperature of the air. Therefore, when the compressed air passes through the de Laval nozzle, the air velocity will increase at the expense of the temperature of the air. This cold high-speed air can then be used to cool the brake assembly of a vehicle. In this way, the durability of the brakes may be extended and fewer brake failures (because of fade) may occur.

It should be noted that the de Laval nozzle is not exchangeable to other seemingly similarly configured nozzles. For instance, a simple Venturi nozzle could not be used instead of the de Laval nozzle. A Venturi nozzle works well as a measuring device (e.g. for flow measurements or pressure difference measurements), or it can be used for creating a sucking effect to suck a secondary medium to become entrained into a flow of primary medium through the Venturi nozzle. However, a Venturi nozzle does not achieve the desired cooling effect as neither the speed increase nor the temperature reduction achieved by the de Laval nozzle can be achieved by a Venturi nozzle.

The brake assembly may, for instance, include a disc brake or a drum brake. The teachings of the present disclosure may be implemented for either type of brake assembly. Furthermore, each wheel of a vehicle that has an associated brake assembly, may be subjected to the cooling control disclosed herein. For instance, a heavy-duty vehicle having a plurality of wheels that are provided with a respective brake assembly, may be provided with a brake cooling system of this disclosure that may cool each of those brake assemblies.

Optionally in some examples, including in at least one preferred example, downstream of the de Laval nozzle, the flow passage is split into a plurality of branches, each branch having an outlet configured to direct supplied air towards a respective brake assembly of a plurality of brake assemblies. A technical benefit may include that cooling of several brake assemblies may be achieved. In some examples, the cooling of the plurality of brake assemblies may be performed simultaneously. In some examples the cooling of the brake assemblies may be individually controllable, for example based on the need of each brake assembly.

Optionally in some examples, including in at least one preferred example, said valve is a main valve, wherein the brake cooling system further comprises a plurality of secondary valves, each branch being provided with a respective one of said plurality of secondary valves, wherein each secondary valve is configured to control the fluid communication through the respective branch, wherein when one of the secondary valves is closed compressed air is prevented from flowing through the respective branch and when it is opened compressed air is allowed to flow through the respective branch. A technical benefit may include that individual control of each brake assembly may be made. For instance, in addition to opening the main valve if the temperature of one of the brake assemblies is too high, the associated secondary valve may also be opened so that the identified brake assembly becomes cooled down.

Optionally in some examples, including in at least one preferred example, said de Laval nozzle is a main de Laval nozzle, wherein the brake cooling system further comprises a plurality of secondary de Laval nozzles, each branch being provided with a respective one of said plurality of secondary de Laval nozzles, the secondary de Laval nozzles further increasing the speed and reducing the temperature of the supplied compressed air. A technical benefit may include that the cooling effect on each individual brake assembly may be further improved.

Optionally in some examples, including in at least one preferred example, in each branch, the secondary de Laval nozzle is arranged in series with and downstream of the secondary valve. A technical benefit may include, in line with the above discussion, that improved control and cooling may be achieved.

Optionally in some examples, including in at least one preferred example, the main de Laval nozzle has a larger flow-through passage than the flow-through passage of any one of the secondary de Laval nozzles, such that a higher flow rate through the main de Laval nozzle is enabled compared to the flow rate enabled through any one of the secondary de Laval nozzles. A technical benefit may include that by having a larger main de Laval nozzle the flow volume can be large enough to be divided into smaller volumes when distributed into the plurality of branches where the smaller secondary de Laval nozzles are provided, and still provide satisfactory cooling effect on each brake assembly.

Optionally in some examples, including in at least one preferred example, the system comprises a plurality of temperature sensors, each temperature sensor being configured to sense the temperature of a respective brake assembly, wherein sensing by any one of the temperature sensors that the temperature of the associated brake assembly is above a predefined limit causes the main valve to become opened so that compressed air is passed from the pressurized air source through the main de Laval nozzle and out through the outlet of the associated branch to the brake assembly in order to bring down the temperature of the brake assembly. A technical benefit may include that by providing a temperature sensor at at each brake assembly, the risk of brake fade for any individual brake assembly may be detected and counteracted at an early stage. Having each temperature sensor operatively connected to the control of the main valve thus enables cooling to be performed when one of the temperature sensors has identified a too high temperature at its associated brake assembly. In some examples, it would be conceivable to cool each brake assembly when one temperature sensor has identified a too high temperature. However, in other examples, it may be conceivable to only cool the brake assembly for which a too high temperature has been detected.

Optionally in some examples, including in at least one preferred example, upon sensing by a temperature sensor that the temperature of a brake assembly is above a predefined limit, in addition to the main valve becoming opened, also the secondary valve in the branch associated with that brake assembly becomes opened, while allowing the other secondary valves to remain closed. A technical benefit may include that this enables individual cooling control of any one of the brake assemblies. Thus, only the brake assemblies in need of cooling (i.e. for those brake assemblies which their associated temperature sensor has detected too high temperature), will receive the compressed cooled air. Hereby, use of compressed air and energy consumption may be reduced.

Optionally in some examples, including in at least one preferred example, the or each valve is normally closed and becomes opened upon receipt of an electric signal from an associated temperature sensor, wherein the or each temperature sensor comprises a switch which:
- is set in an open state when the sensed temperature is below the predefined limit, thereby preventing the electric signal from the temperature sensor to be provided to the valve, and
- is set in a closed state when the measured temperature is above the predefined limit, thereby providing the electric signal to the valve. A technical benefit may include that controlling the main valve and the secondary valves by means of switches is convenient and yet efficient. Although the above described normally-closed type of valves may be practical, another conceivable option would be normally-open type of valves. For a normally-open type of valve, the switch would be configured to the be in the closed state when the temperature is below the predefined limit, energizing the valve to be closed, but when the temperature rises above the predefined limit, then the switch is opened and prevents the electrical signal to reach the valve, which thus returns to its normally-open state, thereby allowing compressed air to pass there through. In some examples, the or each valve may suitably be a solenoid valve, suitably spring-biased towards its normal state. As an alternative to, or in addition to, providing switches for controlling the or each valve, the brake cooling system may have a control unit that receives input information from each temperature sensor and controls each valve based on the received input information.

A de Laval nozzle may typically have a configuration as follows. The or each de Laval nozzle of the brake cooling system may have:
- a convergent section into which compressed air from the pressurized air source is configured to enter,
- a divergent section from which the compressed air exits,
- a throat section located between the convergent and the divergent section,

wherein the divergent section has a longer axial extension than the convergent section,
wherein the convergent section has a longer axial extension than the throat section. A technical benefit may include that this configuration provides for an effective increase of speed and reduction of temperature of the compressed air.

The divergent section may have an expansion portion and a straightening portion, the expansion portion extending from the throat section to the straightening portion, wherein, as viewed in the direction of the flow through the divergent section, the flow-through cross-sectional area starts expanding in the expansion portion and continues to expand in the straightening portion, wherein the rate of expansion along the direction of flow is greater in the expansion portion than in the straightening portion. In line with the above discussion, a technical benefit may include that this configuration provides for an effective increase of speed and reduction of temperature of the compressed air, thereby enabling an efficient cooling of one or more brake assemblies.

According to a second aspect of the disclosure, there is provided a vehicle comprising the brake cooling system of the first aspect. The second aspect of the disclosure may seek to reduce the risk of brake fade. A technical benefit may, analogously to the first aspect, include that by monitoring the temperature of the brakes, and controlling compressed air to flow through a de Laval nozzle before directing the air to the brakes, an efficient cooling of the brakes may be accomplished. The vehicle may suitably be a heavy-duty vehicle such as a truck, construction equipment, etc.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an illustration of a vehicle for which the teachings of the present disclosure may be implemented, according to an example.
**FIG. 2** is an illustration of a brake cooling system according to at least one example of the present disclosure.
**FIG. 3** is a schematic illustration of a de Laval nozzle that may be used in a brake cooling system according to at least one example of the present disclosure.
**FIG. 4** is a schematic illustration of a valve that may be used in a brake cooling system according to at least one example of the present disclosure.
**FIG. 5** is an illustration of a brake cooling system according to at least one other example of the present disclosure.

### DETAILED DESCRIPTION

The detailed description set forth below provides information and examples of the disclosed technology with sufficient detail to enable those skilled in the art to practice the disclosure.

When the brakes of a vehicle, in particular a heavy-duty vehicle, are repeatedly applied, there may be an increased risk of sudden brake failure because of a resulting high temperature in the brake assembly. This may in particular be the case when braking at high speed and/or high load. The present disclosure can counteract such brake failure (brake fade) by cooling an overheated brake assembly in a timely manner. When a temperature sensor detects an overheated brake assembly, compressed air is provided with increased speed and lowered temperature to the brake assembly. When the temperature of the brake assembly has been lowered to an acceptable level, the provision of the cooling compressed air may be stopped until the next time an overheat situation is detected. By using de Laval nozzles, which are traditionally used to provide thrust to for example rockets, an increased speed and reduced temperature of the compressed air can be achieved, thus improving the cooling capability.

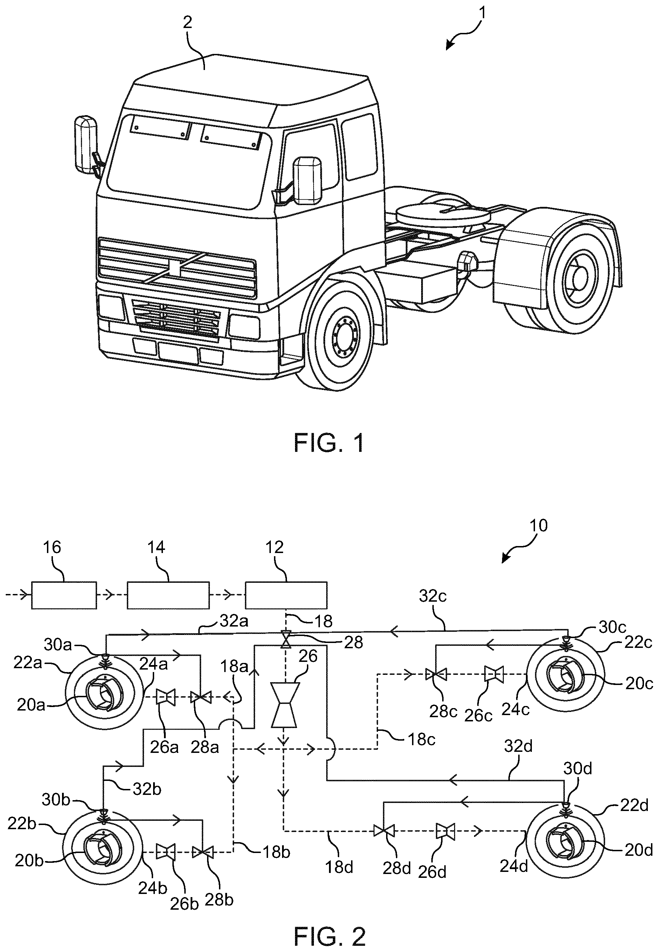

**FIG. 1** is an illustration of a vehicle 1 for which the teachings of the present disclosure may be implemented, according to an example. In this example, the vehicle 1 is a heavy-duty vehicle in the form of a tractor unit. The tractor unit may be powered by an internal combustion engine (ICE). However, the brake cooling system of the present disclosure may also be implemented in other vehicles as well, such as fuel cell electric vehicles (FCEVs), battery electric vehicle (BEVs) or hybrid vehicles. The vehicle 1 may comprise brake assemblies having disc brakes and/or drum brakes. Although a tractor unit has been illustrated, it should be understood that the teachings of the present disclosure may also be implemented in other types of vehicles, such as busses, construction equipment and passenger cars. The illustrated vehicle 1 comprises a cabin 2 in which a driver may operate the vehicle 1. However, in other exemplary embodiments the vehicle 1 may be an autonomous, i.e. self-driving, vehicle.

**FIG. 2** is an illustration of a brake cooling system 10 according to at least one example of the present disclosure. The brake cooling system 10 may be implemented in a vehicle, such as any vehicle discussed above in relation to the discussion of **FIG. 1****.** The brake cooling system 10 comprises a pressurized air source 12 configured to supply pressurized air. The pressurized air source 12 may, for instance, be in the form of an air tank, which can become pressurized by means of a compressor 14 which compresses air and delivers it to the air tank (pressurized air source 12). An air filter 16 may be provided upstream of the compressor 14.

The brake cooling system 10 comprises a flow passage 18 which extends from the pressurized air source 12 to a vicinity of at least one brake assembly 20a-20d. The flow passage 18 is in **FIG. 2** illustrated in dashed lines. In **FIG. 2****,** four wheels 22a-22d are illustrated, each having a respective one of said brake assemblies 20a-20d for allowing a braking action on the associated wheel 22a-22d. It should, however, be understood that the teaching of this disclosure is not limited to this specific number of wheels and brake assemblies. The teachings herein may be implemented for fewer or for more wheels and brake assemblies. In principle, the teachings herein, could even be implement for a single brake assembly.

The flow passage 18 has at least one outlet directing supplied compressed air towards a brake assembly. In **FIG. 2** there are four outlets 24a-24d, one for each brake assembly 20a-20d. More specifically, as illustrated in **FIG. 2****,** in at least some examples the flow passage 18 may be split into a plurality of branches 18a-18d, each branch 18a-18d having a respective one of said outlets 24a-24d configured to direct supplied air towards a respective one of said brake assemblies 20a-20d.

The brake cooling system 10 further comprises at least one de Laval nozzle 26, 26a-26d provided in the flow passage 18. In the example in **FIG. 2****,** there is provided one main de Laval nozzle 26 and a plurality of secondary de Laval nozzles 26a-26d. It should, however, be understood that in other examples, the brake cooling system 10 may have just one de Laval nozzle, for example the main de Laval nozzle 26, wherein the other de Laval nozzles, for example the secondary de Laval nozzles 26a-26d may be omitted. Each de Laval nozzle 26, 26-26d increases the speed of the compressed air that is passed from the pressurized air source 12 and through the de Laval nozzle 26, 26a-26d. Also, a de Laval nozzle has an additional benefit. The speed of the air at the exit of the de Laval nozzle increases at the expense of the internal energy of the air. The internal energy of the air is directly proportional to the temperature of the air. Thus, the compressed air passing through the de Laval nozzle will get a reduced temperature. This cold high-speed air can thus be used to cool a brake assembly of a vehicle. Accordingly, as the compressed air is passed from the pressurized air source 12 and through the main de Laval nozzle 26 the speed of the compressed air is increased, while the temperature of the compressed air is reduced. Similarly, for any compressed air passing through any one of the secondary de Laval nozzles 26a-26d, the speed will be increased and temperature reduced for the compressed air.

As illustrated in the example of **FIG. 2****,** the splitting of the flow passage 18 into the plurality of branches 18a-18d may suitably be made downstream of the main de Laval nozzle 26, but upstream of any secondary de Laval nozzle 26a-26d.

The brake cooling system 10 further comprises at least one valve 28 configured to control the fluid communication from the pressurized air source 12. Thus, when the valve 28 is closed it prevents compressed air from passing through the flow passage 18 to reach any brake assembly 20a-20d. The valve 28 is suitably provided upstream of the main de Laval nozzle 26, such that no compressed air reaches the main de Laval nozzle 26 when the valve 28 is closed. Such a valve 28 located between the main de Laval nozzle 26 and the pressurized air source 12 may be referred to as a main valve 28. In **FIG. 2****,** there are also illustrated a plurality of secondary valves 28a-28d, one for each brake assembly 20a-20d. In some examples, however, the secondary valves 28a-28d may be omitted. In such cases, all brake assemblies 20a-20d will be cooled each time the main valve 28 opens to allow compressed air to flow through the flow passage 18, 18a-18d. Having secondary valves 28a-28d, however, provide the additional benefit of allowing for individual cooling control.

The brake cooling system 10 further comprises at least one temperature sensor configured to sense the temperature of a brake assembly. In **FIG. 2****,** there is provided one temperature sensor 30a-30d for each brake assembly 20a-20d. When one of the temperature sensors 30a-30d, for example temperature sensor 30a, senses that the temperature of the associated brake assembly 20a is above a predefined limit (such as a temperature value at which there is a high risk of brake fade), the main valve 28 is caused to become opened so that compressed air is passed from the pressurized air source 12 through the main de Laval nozzle 26 and out through the outlet 30a of the flow passage 18, 18a to the brake assembly 20a in order to bring down the temperature of the brake assembly 20a. The temperature sensors 30a-30d may suitably be configured to send electrical signals 32a-32d to control the main valve 28 and respective secondary valve 28a-28d. Each temperature sensor 30a-30d, take for example temperature sensor 30a, may either be configured to send a common electric signal 32a both to the main valve 28 and to its associated secondary valve 28a, or may be configured to send one electrical signal 32a to the main valve 28 and a different electrical signal to its associated secondary valve 28a.

In the example of **FIG. 2****,** if a temperature sensor (e.g. temperature sensor 30a) associated with a specific brake assembly 20a detects a temperature above the predefined limit, then, in addition to the main valve 28 becoming opened, also the respective secondary valve 28a in that branch 18a of the flow passage 18 becomes opened. However, the other secondary valves 28b-28d do not need to become opened. Thus, an individual control is possible, in which only the brake assembly in need of cooling is flushed with the cold high-speed compressed air. Thus, from the above, it can be understood that by letting compressed air pass through one or more de Laval nozzles and direct the cold high-speed air to be directed to any brake assembly, the temperature of that brake assembly may be brought down, thereby reducing the risk of brake fade. When neither one of the temperature sensors 30a-30d senses brake assembly temperature above the predefined limit any longer, then the main valve 28 (and suitably also any open secondary valve 28a-28d) may be caused to become closed again.

From the above discussion it can thus be understood that each branch 18a-18d of the flow passage 18 may be provided with a respective secondary valve 28a-28d. Each secondary valve 28a-28d may thus be configured to control the fluid communication through the respective branch 18a-18d. When one of the secondary valves 28a-28d is closed, compressed air is prevented from flowing through the respective branch 18a-18d, and when it is opened, compressed air is allowed to flow through the respective branch 18a-18d.

Similarly, from the above discussion it can be understood that each branch 18a-18d may be provided with a respective secondary de Laval nozzle 26a-26d, wherein the secondary de Laval nozzle 26a-26d further increases the speed and reduces the temperature of the supplied compressed air. In each branch 18a-18d, the secondary de Laval nozzle 26a-26d may suitably be arranged in series with, and downstream of, the secondary valve 28a-28d.

Furthermore, as can be understood from the above discussion, upon sensing by a temperature sensor 30a-30d that the temperature of a brake assembly 20a-20d is above a predefined limit, in addition to the main valve 28 becoming opened, also the secondary valve 28a-28d in the branch associated with that brake assembly 20a-20d becomes opened, while allowing the other secondary valves 28a-28d to remain closed. Thus, in such case, the compressed air can be passed from the pressurized source, via the main valve 28 and the main de Laval nozzle 26 to the individual branch 18a-18d in which the secondary valve 28a-28d has become opened and through the associated secondary de Laval nozzle 26a-26d to flush the brake assembly 20a-20d that has a too high temperature. If the temperature sensors 30a-30d detect that two or more of the brake assemblies 20a-20d have a temperature above the predefined limit, then of course, those secondary valves 26a-26d associated with the identified brake assemblies 20a-20d may become opened so that each brake assembly 20a-20d that needs cooling may be flushed with the high-speed cooled compressed air.

As schematically illustrated in **FIG. 2****,** the main de Laval nozzle 26 may have a larger flow-through passage than the flow-through passage of any one of the secondary de Laval nozzles 26a-26d. This allows for a higher flow rate through the main de Laval nozzle 26 compared to the flow rate enabled through any one of the secondary de Laval nozzles 26a-26d.

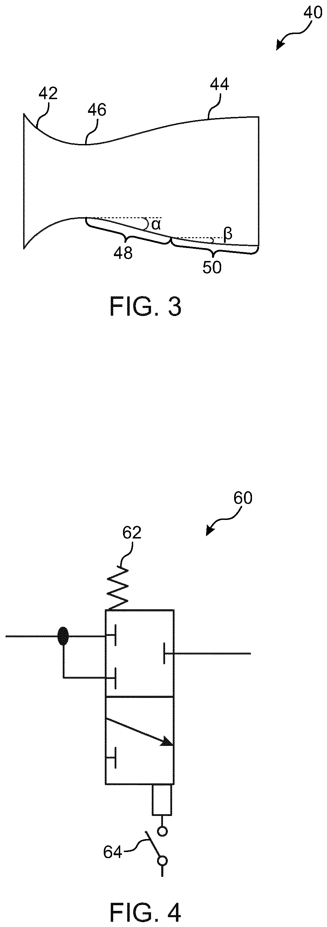

**FIG. 3** is a schematic illustration of a de Laval nozzle 40 that may be used in a brake cooling system according to at least one example of the present disclosure. The illustrated configuration may be applied to a main de Laval nozzle as well as to secondary de Laval nozzles. Thus, as can be seen in **FIG. 3****,** any de Laval nozzle provided in any example of the brake cooling system of this disclosure, may have a convergent section 42, a divergent section 44 and a throat section 46 located between the convergent section 42 and the divergent section 44. Compressed air from the pressurized air source may thus enter into the convergent section 42, pass through the throat section 46 and then exit from the divergent section 44. As can be seen in **FIG. 3** the divergent section 44 has a longer axial extension than the convergent section 42. In its turn, the convergent section 42 has a longer extension than the throat section 46.

The divergent section 44 has an expansion portion 48 and a straightening portion 50. The expansion portion 48 extends from the throat section 46 to the straightening portion 50. As viewed in the direction of the flow through the divergent section 44, the flow-through cross-sectional area starts expanding in the expansion portion 48 and continues to expand in the straightening portion 50. The rate of expansion along the direction of flow is greater in the expansion portion 48 than in the straightening portion 50. In other words, the internal wall surface of the de Laval nozzle 40 forms a greater angle a relative to the center axis at the expansion portion 48 compared to the angle β formed at the straightening portion 50.

**FIG. 4** is a schematic illustration of a valve 60 that may be used in a brake cooling system according to at least one example of the present disclosure. The illustrated valve 60 may be implemented as any one of the valves discussed herein. In other words, **FIG. 4** may be a schematic illustration of how a main valve and/or a secondary valve may be configured. The illustrated valve 60 is a solenoid valve. However, other types of valves are also conceivable.

In **FIG. 4****,** the valve 60 is shown in its closed state. This is its normal state. A spring 62 may be provided to bias the valve 60 to this normally closed state. The valve 60 is configured to become opened upon receipt of an electric signal from an associated temperature sensor. When the electrical signal reaches the valve 60, it becomes energized and subjected to a counterforce which overcomes the spring force (directed downwards in the drawing), thereby moving the valve 60 to an open state (upwards in the drawing).

As illustrated in **FIG. 4****,** whether or not the electric signal reaches the valve 60, may be controllable by the position of a switch 64. Each temperature sensor may suitably comprise such a switch 64. The switch 64 is set in an open state (as shown in **FIG. 4**) when the sensed temperature is below the predefined limit, thereby preventing the electric signal from the temperature sensor to be provided to the valve 60. However, when the sensed temperature is above the predefined limit, the switch 64 is set in a closed state, thereby providing the electric signal to the valve 60 and thereby opening the valve 60 to allow compressed air to pass through the valve 60.

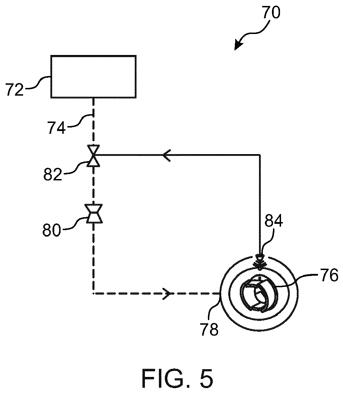

**FIG. 5** is an illustration of a brake cooling system 70 according to at least one other example of the present disclosure. The brake cooling system 70 comprises:
- a pressurized air source 72 configured to supply compressed air,
- a flow passage 74 extending from the pressurized air source 72 to a vicinity of a brake assembly 76, the flow passage 74 having an outlet 78 directing supplied compressed air towards the brake assembly 76,
- at least one de Laval nozzle 80 provided in the flow passage 74, wherein the de Laval nozzle 80 increases the speed and reduces the temperature of compressed air that is passed from the pressurized air source 72 and through the de Laval nozzle 80,
- a valve 82 configured to control the fluid communication between the pressurized air source 72 and the de Laval nozzle 80, wherein when the valve 82 is closed compressed air is prevented from reaching the de Laval nozzle 80 and when the valve 82 is open compressed air is allowed to pass to and through the de Laval nozzle 80, and
- at least one temperature sensor 84 configured to sense the temperature of a brake assembly 76,
wherein sensing by the temperature sensor 84 that the temperature of the brake assembly 76 is above a predefined limit causes the valve 82 to become opened so that compressed air is passed from the pressurized air source 72 through the de Laval nozzle 80 and out through the outlet 78 of the flow passage 74 to the brake assembly 76 in order to bring down the temperature of the brake assembly 76.

Example 1: A brake cooling system, comprising:
- a pressurized air source configured to supply compressed air,
- a flow passage extending from the pressurized air source to a vicinity of a brake assembly, the flow passage having an outlet directing supplied compressed air towards the brake assembly,
- at least one de Laval nozzle provided in the flow passage, wherein the de Laval nozzle increases the speed and reduces the temperature of compressed air that is passed from the pressurized air source and through the de Laval nozzle,
- a valve configured to control the fluid communication between the pressurized air source and the de Laval nozzle, wherein when the valve is closed compressed air is prevented from reaching the de Laval nozzle and when the valve is open compressed air is allowed to pass to and through the de Laval nozzle, and
- at least one temperature sensor configured to sense the temperature of a brake assembly, wherein sensing by the temperature sensor that the temperature of the brake assembly is above a predefined limit causes the valve to become opened so that compressed air is passed from the pressurized air source through the de Laval nozzle and out through the outlet of the flow passage to the brake assembly in order to bring down the temperature of the brake assembly.

Example 2: The brake cooling system of example 1, wherein downstream of the de Laval nozzle, the flow passage is split into a plurality of branches, each branch having an outlet configured to direct supplied air towards a respective brake assembly of a plurality of brake assemblies.

Example 3: The brake cooling system of example 2, wherein said valve is a main valve, wherein the brake cooling system further comprises a plurality of secondary valves, each branch being provided with a respective one of said plurality of secondary valves, wherein each secondary valve is configured to control the fluid communication through the respective branch, wherein when one of the secondary valves is closed compressed air is prevented from flowing through the respective branch and when it is opened compressed air is allowed to flow through the respective branch.

Example 4: The brake cooling system of any one of examples 2-3, wherein said de Laval nozzle is a main de Laval nozzle, wherein the brake cooling system further comprises a plurality of secondary de Laval nozzles, each branch being provided with a respective one of said plurality of secondary de Laval nozzles, the secondary de Laval nozzles further increasing the speed and reducing the temperature of the supplied compressed air.

Example 5: The brake cooling system of example 4 when dependent on example 3, wherein, in each branch, the secondary de Laval nozzle is arranged in series with and downstream of the secondary valve.

Example 6: The brake cooling system of any of examples 4 or 5, wherein the main de Laval nozzle has a larger flow-through passage than the flow-through passage of any one of the secondary de Laval nozzles, such that a higher flow rate through the main de Laval nozzle is enabled compared to the flow rate enabled through any one of the secondary de Laval nozzles.

Example 7: The brake cooling system of any one of examples 2-6, wherein the system comprises a plurality of temperature sensors, each temperature sensor being configured to sense the temperature of a respective brake assembly, wherein sensing by any one of the temperature sensors that the temperature of the associated brake assembly is above a predefined limit causes the main valve to become opened so that compressed air is passed from the pressurized air source through the main de Laval nozzle and out through the outlet of the associated branch to the brake assembly in order to bring down the temperature of the brake assembly.

Example 8: The brake cooling system of example 7, wherein upon sensing by a temperature sensor that the temperature of a brake assembly is above a predefined limit, in addition to the main valve becoming opened, also the secondary valve in the branch associated with that brake assembly becomes opened, while allowing the other secondary valves to remain closed.

Example 9: The brake cooling system of any one of examples 1-8, wherein the or each valve is normally closed and becomes opened upon receipt of an electric signal from an associated temperature sensor, wherein the or each temperature sensor comprises a switch which:
- is set in an open state when the sensed temperature is below the predefined limit, thereby preventing the electric signal from the temperature sensor to be provided to the valve, and
- is set in a closed state when the measured temperature is above the predefined limit, thereby providing the electric signal to the valve.

Example 10: The brake cooling system of any one of examples 1-9, wherein the or each de Laval nozzle has:
- a convergent section into which compressed air from the pressurized air source is configured to enter,
- a divergent section from which the compressed air exits,
- a throat section located between the convergent and the divergent section,

wherein the divergent section has a longer axial extension than the convergent section,
wherein the convergent section has a longer axial extension than the throat section.

Example 11: The brake cooling system of example 10, wherein the divergent section has an expansion portion and a straightening portion, the expansion portion extending from the throat section to the straightening portion, wherein, as viewed in the direction of the flow through the divergent section, the flow-through cross-sectional area starts expanding in the expansion portion and continues to expand in the straightening portion, wherein the rate of expansion along the direction of flow is greater in the expansion portion than in the straightening portion.

Example 12: A vehicle comprising the brake cooling system according to any one of examples 1-11.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A brake cooling system, comprising:
- a pressurized air source configured to supply compressed air,
- a flow passage extending from the pressurized air source to a vicinity of a brake assembly, the flow passage having an outlet directing supplied compressed air towards the brake assembly,
- at least one de Laval nozzle provided in the flow passage, wherein the de Laval nozzle increases the speed and reduces the temperature of compressed air that is passed from the pressurized air source and through the de Laval nozzle,
- a valve configured to control the fluid communication between the pressurized air source and the de Laval nozzle, wherein when the valve is closed compressed air is prevented from reaching the de Laval nozzle and when the valve is open compressed air is allowed to pass to and through the de Laval nozzle, and
- at least one temperature sensor configured to sense the temperature of a brake assembly, wherein sensing by the temperature sensor that the temperature of the brake assembly is above a predefined limit causes the valve to become opened so that compressed air is passed from the pressurized air source through the de Laval nozzle and out through the outlet of the flow passage to the brake assembly in order to bring down the temperature of the brake assembly.

2. The brake cooling system of claim 1, wherein downstream of the de Laval nozzle, the flow passage is split into a plurality of branches, each branch having an outlet configured to direct supplied air towards a respective brake assembly of a plurality of brake assemblies.

3. The brake cooling system of claim 2, wherein said valve is a main valve, wherein the brake cooling system further comprises a plurality of secondary valves, each branch being provided with a respective one of said plurality of secondary valves, wherein each secondary valve is configured to control the fluid communication through the respective branch, wherein when one of the secondary valves is closed compressed air is prevented from flowing through the respective branch and when it is opened compressed air is allowed to flow through the respective branch.

4. The brake cooling system of any one of claims 2-3, wherein said de Laval nozzle is a main de Laval nozzle, wherein the brake cooling system further comprises a plurality of secondary de Laval nozzles, each branch being provided with a respective one of said plurality of secondary de Laval nozzles, the secondary de Laval nozzles further increasing the speed and reducing the temperature of the supplied compressed air.

5. The brake cooling system of claim 4 when dependent on claim 3, wherein, in each branch, the secondary de Laval nozzle is arranged in series with and downstream of the secondary valve.

6. The brake cooling system of any of claims 4 or 5, wherein the main de Laval nozzle has a larger flow-through passage than the flow-through passage of any one of the secondary de Laval nozzles, such that a higher flow rate through the main de Laval nozzle is enabled compared to the flow rate enabled through any one of the secondary de Laval nozzles.

7. The brake cooling system of any one of claims 2-6, wherein the system comprises a plurality of temperature sensors, each temperature sensor being configured to sense the temperature of a respective brake assembly, wherein sensing by any one of the temperature sensors that the temperature of the associated brake assembly is above a predefined limit causes the main valve to become opened so that compressed air is passed from the pressurized air source through the main de Laval nozzle and out through the outlet of the associated branch to the brake assembly in order to bring down the temperature of the brake assembly.

8. The brake cooling system of claim 7, wherein upon sensing by a temperature sensor that the temperature of a brake assembly is above a predefined limit, in addition to the main valve becoming opened, also the secondary valve in the branch associated with that brake assembly becomes opened, while allowing the other secondary valves to remain closed.

9. The brake cooling system of any one of claims 1-8, wherein the or each valve is normally closed and becomes opened upon receipt of an electric signal from an associated temperature sensor, wherein the or each temperature sensor comprises a switch which:
- is set in an open state when the sensed temperature is below the predefined limit, thereby preventing the electric signal from the temperature sensor to be provided to the valve, and
- is set in a closed state when the measured temperature is above the predefined limit, thereby providing the electric signal to the valve.

10. The brake cooling system of any one of claims 1-9, wherein the or each de Laval nozzle has:
- a convergent section into which compressed air from the pressurized air source is configured to enter,
- a divergent section from which the compressed air exits,
- a throat section located between the convergent and the divergent section,
wherein the divergent section has a longer axial extension than the convergent section,
wherein the convergent section has a longer axial extension than the throat section.

11. The brake cooling system of claim 10, wherein the divergent section has an expansion portion and a straightening portion, the expansion portion extending from the throat section to the straightening portion, wherein, as viewed in the direction of the flow through the divergent section, the flow-through cross-sectional area starts expanding in the expansion portion and continues to expand in the straightening portion, wherein the rate of expansion along the direction of flow is greater in the expansion portion than in the straightening portion.

12. A vehicle comprising the brake cooling system according to any one of claims 1-11.
